# EUROPEAN PATENT SPECIFICATION

(11) **EP 3 892 674 B1**
(45) Date of publication and mention of the grant of the patent: **29.05.2024**
(21) Application number: 19849001.3
(22) Date of filing: 05.12.2019
(51) Int. Cl.: C08J 11/10, C10G 1/10, C08C 19/08, C08L 19/00

(54) **RUBBER DEVULCANISATION METHOD**
PROCESSO DE DESVULCANIZAÇÃO DE BORRACHA
PROCÉDÉ DE DÉVULCANISATION DE CAOUTCHOUC

(30) Priority: 05.12.2018 PT 2018115191
(43) Date of publication of application: 13.10.2021
(73) Proprietor: Alerta Plateia, Lda., 4615-380 Caramos (PT)
(72) Inventor: TEIXEIRA FERREIRA, António, 4610-741 Sendim Flg (PT)
(74) Representative: Pereira da Cruz, Joao
(86) International application number: PCT/IB2019/060465
(87) International publication number: WO 2020/115689

(56) References cited:
- EP-A1- 3 088 455
- WO-A1-03/029337
- WO-A1-2014/042510
- WO-A2-2012/134266
- CN-A- 103 073 741
- GB-A- 2 481 205
- JP-A- 2000 095 895
- US-A1- 2015 191 578

## Description

### FIELD OF THE INVENTION

The present invention falls within the field of processing and recycling of rubber waste, namely from the footwear industry, but not only from this industry, also from the automotive industry, household appliances, building materials, among others. More specifically, this invention discloses a process for devulcanization of rubber.

### BACKGROUND OF THE INVENTION

Current devulcanization methods, in addition to their much lower yields and to the fact that they compromise the properties of the resulting material, also have reduced economic and environmental sustainability.

The process disclosed in the present invention allows a devulcanization yield of over 70% to be obtained using rubbers from various industries and which will be reused, while retaining their properties as if virgin rubber was used. In fact, rubber can be processed and revulcanized, like virgin rubber, and thus used as a new raw material.

From a technical point of view, the present invention discloses a novel devulcanization process that addresses the sequestration of chain sulfur using copper salts, and also the breaking of chain C-S bonds using catalysts, as well as allowing the reaction monitoring for the reuse of rubber waste without significant loss of its final properties. From an environmental point of view, the method of the present invention, as opposed to current techniques that employ high temperatures, provides a drastic reduction in emissions of volatile organic compound (VOCs) and energy consumption, thus being more environmentally friendly and less risky to the workers' health.

Rubber devulcanized by the process disclosed in the present invention has a high added value, generating a disruptive effect on the market.

In fact, the Portuguese footwear industry is increasingly distinguished by the quality, comfort, and exquisite and original design of its products. This explains the increase in exports that has been seen over the last few years. It is one of the strong industrial markets at the national level and, associated to this sector, there is the rubber industry, mainly for the manufacture of shoe soles. The high quality, which is characteristic of the Portuguese footwear industry, results from the high quality of the raw materials, the excellent product design, and the manufacturing techniques wherein rubber is employed.

However, there is a shortcoming in what concerns recycling programs for vulcanized elastomers that allow an effective rubber devulcanization, such as vulcanized rubber from tyres - by far the largest amount of rubber products manufactured worldwide - which became an environmental, social and economic issue. For example, in the European Union, the End-of-Life-Tires (ELT) from cars cannot currently be sent to landfill and must be recycled. In Portugal, this implies processing over 83,000 tons/year of tyres that are being collected for recovery, of which more than 22,000 tons/year are sent to energy recovery (burning in ovens) . This recovery is an end-of-line measure, as rubber is only being used as an alternative fuel, not taking advantage from its properties as an elastomeric material. These data show the scale of the problem and the need to find new alternatives for rubber reuse as a raw material for high value-added applications. If rubber were reused after devulcanization without incorporating expensive technological solutions, as long as their final properties are similar to virgin rubber, the resulting materials would have low economic costs - an excellent example of circular economy.

After devulcanization, rubber can be processed and revulcanized, like virgin rubber and thus used as a new raw material. However, there is currently no sufficiently efficient and cost-effective devulcanization process being implemented in the market.

Current devulcanization processes are varied, but they can be classified into two categories. On the one hand, the physical processes in which the crosslinked material undergoes stress (mechanical stress, radiation, etc.) which leads to breakage of weaker chemical bonds and, therefore, destruction of the crosslinking given by the C-S bonds among others, including some part of the C-C bonds of the main chains. However, breaking these latter C-C bonds leads to degradation of the properties of the final material. On the other hand, the chemical processes described in the literature, where devulcanization is carried out by the addition of chemical agents in which the C-S bonds are to be selectively broken by maintaining the C-C bonds intact, have so far been found to be insufficiently effective and profitable, not having originated production methods with quantitative expression of practical significance. The production process of footwear, particularly rubber soles, typically involves the use of raw materials from virgin styrene butadiene rubber (SBR), natural rubber (NR) or ethylene-propylene-diene monomer rubber (EPDM), as well as the use of silicones. After production, a polymeric material with high adhesion performance, thermal resistance and durability is obtained. Thermomechanical solutions for devulcanization do not apply to all types of elastomers (only to NR/SBR/NBR/EPDM) and all vulcanization systems (only with sulfur) and lead to a significant increase in material temperature which may affect some mechanical characteristics of the material after revulcanization. In mechanical chemical solutions, the cost of catalysts has a major impact on competitiveness due to the addition of a new ingredient to the formulation, increasing the costs of these methods. Moreover, there are limits to these applications due to ecological restrictions, particularly legal ones, which limit most of these chemicals in Western countries.

### Chemical/Thermochemical Devulcanization

Chemical compounds have been used to devulcanize rubber from end-of-life tyres since the 1960s. Originally, most chemical devulcanization processes involved the mixing of reduced rubber particles and chemical reagents in a mixer, and controlling temperature and pressure, which resembled the most to processes of recovery by sintering. In general, the rubber is fed to a mixer with an evaporating agent and then heated. But the higher temperature and pressure conditions employed result in severe polymer degradation along with crosslinking scission, which makes those processes less attractive.

### Devulcanization with iron chloride and phenyl hydrazine

A process that regenerates vulcanized rubber by treating the material at room temperature and atmospheric pressure for several hours with iron chloride and phenyl hydrazine, where phenyl hydrazine is the main reagent and FeCl₂ acts as a catalyst, is reported (Kawabata 1981; Tamashitaet al., 1978). Although claimed to be a devulcanization method, this process is essentially a recovery method wherein devulcanization is achieved by oxidation and degradation of the rubber chain. If oxygen is present in sufficient concentration, several radicals are formed that will degrade the rubber molecules through 'Bolland oxidation' (van Krevelen et Nijenhuis, 2009).

### Phase Transfer Catalysis

The principles of phase transfer catalysis have also been used to devulcanize rubbers cured with an ionic salt dissolved in an organic solvent, which exchange their anions with a hydroxyl ion when exposed to alkaline medium (Nicholas, 1979; 1982). The ionic salt carrying the hydroxyl ion is diffused into the rubber and reacts with sulfur, breaking the crosslinks with small scission of the main chain. Crosslinked rubber particles can be considered as a viscous hydrocarbon phase. According to this method, if the hydroxide ions can be transported in this way at acceptable rates, then the polysulfidic crosslinks can be selectively broken. Breaking of monosulfidic crosslinks is also expected without significant scission of the main chain. But the scission of monosulfidic crosslinks does not occur only according to this reaction in the case of crosslinked rubber, as deprotonation is the most viable reaction. The breaking of 70 to 75 percent of crosslinks has been claimed with this process. When this recycled matter is mixed with new rubber, mechanical properties comparable to the ones of the recycled rubber-free control mixture are obtained.

In addition to the rubber devulcanization processes above described, there is also:
- Devulcanization by microwaves;
- Devulcanization using supercritical CO2;
- Devulcanization using biological methods (biodevulcanization);
- Devulcanization using ultrasound;
- Combinations of two or more of the previous methods.

So far, none of the existing methods presents a definitive solution compared to the remaining ones in the devulcanization treatment of rubber waste and therefore most of its potential value is lost.

There are currently no industries producing devulcanized rubber, with specifications suitable for use as a raw material and which can partially or totally substitute in the formulation of compounds of the same amount of polymers of virgin rubber, as natural rubber (NR) or synthetic rubber (SBR).
Patent WO2003029337A1 discloses a process for reclaiming sulfur-cured, vulcanized rubber by combining finely ground scrap vulcanized rubber within a specialized, twin-screw extruder capable of providing strong shearing and just-on-time mixing; adding a reclaiming agent to the extruder; and masticating the rubber scrap and reclaiming agent within the extruder until the rubber scrap is devulcanized. It also discloses a unique composition of reclaiming agent, which preferably includes the following compounds: accelerators TBBS, ZMBT, MBT, and TMTM; activators zinc oxide and stearic acid; and zinc salts of fatty acids and sulfur.
Patent WO2012134266A2 discloses a devulcanisation agent, and a process for recycling rubber, the devulcanisation agent including one or more devulcanisation reactants and at least one devulcanisation activator wherein the devulcanisation reactants include one or more phenylenediamine derivatives, dihydroquinoline derivatives, and/or quinone diimine derivatives.

The object of the present invention is to innovatively overcome the above-mentioned disadvantages of the prior art.

More specifically, this invention relates to:
- An innovative rubber devulcanization process in which higher yields can be achieved, i.e., it is possible with this process to achieve breakage of cross-linking points greater than 70% and to do so on a large scale;
- Providing higher-quality devulcanized rubber with greater economic and environmental sustainability, from recycled rubber waste widely available in Portugal and also in Europe, such as recycled rubber from tyres.
- Devulcanized rubber obtained by the process of the present invention may be reused in a wide range of industries/products, making them more sustainable and value-added. Besides footwear soles, the industries and/or products likely to use devulcanized rubber obtained by the process of the present invention will be the manufacturing industry of automotive components, household appliances and building materials, among others.

### SUMMARY OF THE INVENTION

The present invention thus discloses an innovative rubber devulcanization process, which allows about 70% devulcanization based on new sequestration techniques of sulfur (S) present in the rubber with breakage of carbon-sulfur (C-S) bonds, so that devulcanized rubber can be reused as a raw material in the footwear, automotive, household appliances, building materials and other industries. The process of this invention will allow replacement of a significant part of the raw material that is used by the mentioned industries, thus reusing vulcanized rubber waste, such as tyre recycled rubber powder.

Devulcanized rubber obtained by the process of the present invention may be distributed in bulk, micronized, or in its most usual form as devulcanized paste.

This process allows producing an average of 400 tons/month. The reuse rate of this rubber waste can be as high as 100%, and it is commonly reused in a wide range of industrial applications, as already mentioned, namely as a substitute for part of the new raw material, for instance, in the production of shoe soles.

The present invention is defined by the appended claims.

### DESCRIPTION OF THE FIGURES

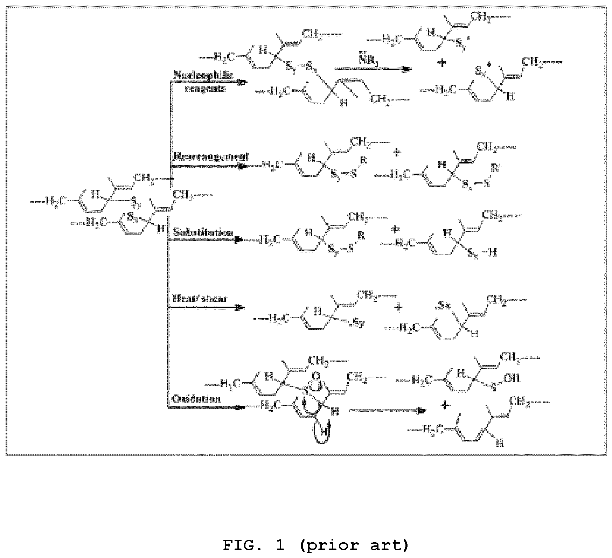

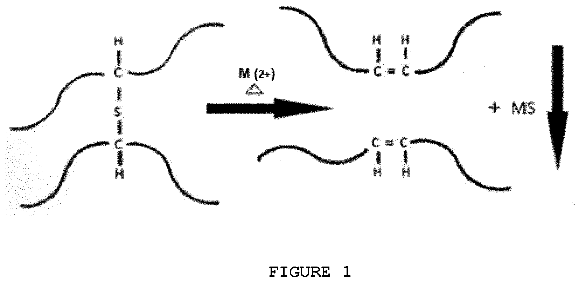

Figure 1 - Schematic representation of the irreversible removal of sulfur atoms present in the vulcanized rubber.

### DETAILED DESCRIPTION OF THE INVENTION

In addition to the methods previously described as being used to devulcanize the rubber, there is also devulcanization by breaking the C-S bonds.

In the polymeric matrix of a vulcanized rubber, three types of bonds stand out: the carbon-carbon bond (C-C), with EC-C = 370 kJ/mol, the carbon-sulfur bond (C-S), with EC-S - 310 kJ/mol, and the sulfur-sulfur (S-S) bond, with ES-S - 270 kJ/mol (Barbosa, Nunes, & Ambrósio, 2017) (Myhre, Saiwari, Dierkes, & Noordermeer, 2012).

The object of the present invention is a continuous catalysed process for rubber devulcanization that leads to the breaking of the S-S and C-S bonds, which correspond to the polymer crosslinking points, without, however, breaking the C-C bonds responsible for the length and structure of the polymer chains, thus allowing the properties of devulcanized rubber to remain as similar as possible to those of the original virgin rubber, and with selective breakage of sulfur bonds being promoted.

This selective breaking of bonds is enhanced by the addition of catalysts that exhibit greater sulfur selectivity. Several families of catalysts are mentioned in the literature, from amines to sulfur or copper compounds, among others. (Abraham, Cherian, Elbi, Pothen, & Thomas, 2011) (Saiwari, 2013) (Deivasigamani, Nanjan, & Mani, 2017).

In a preferred embodiment, rubber waste is collected from various industries using this material such as the footwear components industry, the shoe industry, the automotive industry, among others, namely products such as soles, straps, trimmings, burrs, tyres (the metal component being removed), etc.

Subsequently, the material to be recycled passes through a grinder in order to provide a grain of about 5 to 10 cm, and then this material will be granulated until a grain of about 5 to 7 mm is obtained.

Advantageously, the granulate will then be milled until it reaches a particle size of 0.5 to 0.8 mm and put into big bags.

This granulate is properly weighed, and to it will be added various additives such as calcium carbide, silica, resin and oil and catalysts, all these compounds being properly mixed so that a homogeneous mixture is obtained.

According to the process of the present invention, catalysts are used which act as nucleophiles which are powdered cement.

In another preferred embodiment, the nucleophilic catalysts are present in a percentage by weight, taking into account the total weight of the mixture, between 0.1% and 5% and even more preferably between 0.5 and 2%.

According to the invention, copper salt co-catalysts are employed for the sequestration of sulfur. Co-catalysts are understood as catalysts that help and/or enhance the action of the catalysts.

Preferably, the co-catalysts are present in a percentage by weight, taking into account the total weight of the mixture, between 1% and 8% and even more preferably between 2% and 5%.

Preferably, this mixture is deposited again in a reservoir, the continuous feeder reservoir, with sensors communicating to a scale, and will enter the devulcanization process through the equipment programmed according to the material to be devulcanized. The mixture is thus fed into a continuous and closed loop reactor extruder with a self-cleaning spindle, having inside temperatures and pressures ranging from 120 to 500°C, preferably 200 to 320°C, and 80 and 100 bar pressure respectively. It will be this reactor extruder that will allow breaking - up to about 70% - the sulfur bonds or crosslinking bridges between the rubber molecular chains, while always maintaining the C-C bonds.

In a preferred embodiment, the reactor-extruder further comprises a disc with four blades arranged closely to said disc, which will allow the devulcanized rubber to have a grain size of between 2 and 3 mm. This granulometry provides homogeneity to the end product and ensures that the migration kinetics of the catalysts in the grain free volume promotes depolymerization inside of each grain in the reactor extruder and within the residence time.

Preferably, the material is cooled to a room temperature between 20°C and 30°C. Cooling is performed by cold water exchange in a circuit provided with augers (rotating conveyor of material), thus completing the devulcanization process.

The devulcanized rubber is further filtered and homogenized to eliminate some particles that might have not been well devulcanized. In a preferred embodiment of the present invention, the homogenization is carried out by two different sized metal rollers, one larger than the other, providing devulcanized rubber sheets that are ready to be reused. It is also possible to agglomerate/standardize the devulcanized rubber so that it is supplied as paste bales on pallets.

So, this is a thermo-mechanical process in which the temperatures, residence times, pressures and humidity employed in the process have been carefully selected and combined synergistically.

Table 1 shows a number of technical characteristics of the most commonly used rubber raw materials (prior art). It should be noted that "sintered rubber" is obtained by means of very basic sintering technologies, with reduced and meaningless industrial application:

**TABLE 1**

| **Typical comparative values obtained on vulcanized test pieces:** | | | |
|---|---|---|---|
| Raw material: | Tensile strength at break (MPa) | Module at 100% (MPa) | Elongation at break (%) |
| Sintered Rubber | 3 to 5 | 1 to 2 | 120 to 180 |
| Reclaimed Rubber | 4 to 6 | 1 to 3 | 150 to 250 |
| Devulcanized Rubber | 8 to 18 | 2 to 3 | 300 to 350 |
| Virgin Rubber | 12 to 28 | 2 to 4 | 400 to 800 |

Table 2 presents some technical characteristics of the most commonly used rubber raw materials, and with the devulcanized rubber being obtained by the present process.

**TABLE 2**

| *Raw material* | *Tensile strength at break (MPa)* | *Module at 100% (MPa)* | *Elongation at break (%)* |
|---|---|---|---|
| Devulcanized Rubber | 8 to 18 | 2 to 3 | 300 to 350 |
| Virgin Rubber | 12 to 28 | 2 to 4 | 400 to 800 |

### CONCLUSION

As can be seen from the above tables, the ranges of properties are of the same order of magnitude and partially superposable, which allows us to conclude that the use of devulcanized rubber by the process of the present invention can be applied in many of the applications in which virgin rubber is used.

As will be evident to a person skilled in the art, the present invention should not be limited to the embodiments described herein, with a number of changes being possible, which remain within the scope of this invention.

Of course, the preferred embodiments above described are combinable in the different possible forms, the repetition of all such combinations being herein avoided.

## Claims

1. A continuous process for devulcanization and recycling of of sulfur-vulcanized rubber, **characterized in that** it comprises the following steps:
a) Collecting the rubber waste from various industries;
b) Recycling the material from step a) into a grinder, thereby providing milled material with approx. 5 to 10 cm;
c) Successive milling until the material reaches a grain of about 5 to 7 mm;
d) Adding additives such as calcium carbide, silica, resin, oil, nucleophilic catalysts and co-catalysts, wherein said nucleophilic catalysts is powdered cement and said co-catalysts is copper salts;
e) Homogenizing the mixture of step d);
f) Feeding the mixture from step d) into a reactor extruder with a self-cleaning spindle and a disc, which operates continuously in a closed circuit having inside temperatures and pressures ranging from 120 to 500°C, preferably 200 to 320°C, and 80 and 100 bar;
g) Cooling the mixture to a room temperature ranging from 20 to 30°C, thus completing the devulcanization process.

2. A process according to claim 1, **characterized in that** the rubber used in step a) is from industries selected among footwear industry, automotive industry and others, namely from products such as soles, straps, soles, straps, trimmings, burrs, tyres, with the metal component being removed.

3. A process according to any of the previous claims, **characterized in that** the granulate obtained from step c) has a grain size of between 0.5 and 0.8 mm.

4. A process according to claim 4, **characterized in that** the temperature inside the reactor extruder is between 200 and 400°C.

5. A process according to any of the previous claims, **characterized in that** the nucleophilic catalysts are present in a percentage by weight, taking into account the total weight of the mixture, between 0.1% and 5%.

6. A process according to claim 1, **characterized in that** the nucleophilic catalysts are present in a percentage by weight, taking into account the total weight of the mixture, between 0.5 and 2%.

7. A process according to any of the previous claims, **characterized in that** the co-catalysts are present in a percentage by weight, taking into account the total weight of the mixture, between 1% and 8%.

8. A process according to any of the previous claims, **characterized in that** the co-catalysts are present in a percentage by weight, taking into account the total weight of the mixture, between 2% and 5%.

9. A process according to any of the previous claims, **characterized in that** the cooling on step h) is performed by cold water exchange in a circuit provided with augers (rotating conveyor of material).

10. A process according to any of the previous claims, **characterized in that** after the said cooling, the devulcanized rubber is filtered.

11. A process according to any of the previous claims, **characterized in that** the homogenization is carried out by two different sized metal rollers, one larger than the other.

## Patentansprüche

1. Kontinuierliches Verfahren zur Devulkanisierung und zum Recycling von schwefelvulkanisiertem Kautschuk, **dadurch gekennzeichnet, dass** es die folgenden Schritte umfasst:
a) Sammeln von Gummiabfällen aus verschiedenen Industrien;
b) Recyceln des Materials aus Schritt a) in einem Mahlwerk, wodurch Fräsgut mit ca. 5 bis 10 cm entsteht;
c) sukzessives Mahlen, bis das Material eine Korngröße von etwa 5 bis 7 mm erreicht;
d) Hinzufügen von Additiven wie Kalziumkarbid, Siliziumdioxid, Harz, Öl, nukleophile Katalysatoren und Cokatalysatoren, wobei es sich bei den nukleophilen Katalysatoren um pulverisierten Zement und bei den CoKatalysatoren um Kupfersalze handelt;
e) Homogenisierung der Mischung aus Schritt d) ;
f) Einspeisung der Mischung aus Schritt d) in einen Reaktorextruder mit einer selbstreinigenden Spindel und einer Scheibe, der kontinuierlich in einem geschlossenen Kreislauf mit Innentemperaturen und Drücken im Bereich von 120 bis 500°C, vorzugsweise 200 bis 320°C, und 80 bis 100 bar arbeitet;
g) Abkühlen der Mischung auf eine Raumtemperatur von 20 bis 30 °C, wodurch der Devulkanisierungsprozess abgeschlossen wird.

2. Verfahren nach Anspruch 1, **dadurch gekennzeichnet, dass** der in Schritt a) verwendete Kautschuk aus Industrien stammt, die aus der Schuhindustrie, der Automobilindustrie und anderen ausgewählt sind, nämlich aus Produkten wie Sohlen, Riemen, Sohlen, Riemen, Garnituren, Graten, Reifen, wobei der Metallanteil entfernt wird.

3. Verfahren nach einem der vorhergehenden Ansprüche, **dadurch gekennzeichnet, dass** das aus Schritt c) erhaltene Granulat eine Korngröße zwischen 0,5 und 0,8 mm aufweist.

4. Verfahren nach Anspruch 4, **dadurch gekennzeichnet, dass** die Temperatur im Inneren des Reaktorextruders zwischen 200 und 400 °C liegt.

5. Verfahren nach einem der vorhergehenden Ansprüche, **dadurch gekennzeichnet, dass** die nukleophilen Katalysatoren in einem Gewichtsprozentsatz, bezogen auf das Gesamtgewichts der Mischung, zwischen 0,1% und 5% vorhanden sind.

6. Verfahren nach Anspruch 1, **dadurch gekennzeichnet, dass** die nukleophilen Katalysatoren in einem Gewichtsprozentsatz, bezogen auf das Gesamtgewicht der Mischung, zwischen 0,5 und 2% vorhanden sind.

7. Verfahren nach einem der vorhergehenden Ansprüche, **dadurch gekennzeichnet, dass** die Cokatalysatoren in einem Gewichtsprozentsatz, bezogen auf das Gesamtgewicht der Mischung, zwischen 1% und 8% vorhanden sind.

8. Verfahren nach einem der vorhergehenden Ansprüche, **dadurch gekennzeichnet, dass** die Cokatalysatoren in einem Gewichtsprozentsatz, bezogen auf das Gesamtgewicht der Mischung, zwischen 2% und 5% vorhanden sind.

9. Verfahren nach einem der vorhergehenden Ansprüche, **dadurch gekennzeichnet, dass** die Kühlung in Schritt h) durch den Austausch von kaltem Wasser in einem Kreislauf mit Schnecken (rotierender Materialförderer) durchgeführt wird.

10. Verfahren nach einem der vorhergehenden Ansprüche, **dadurch gekennzeichnet, dass** der devulkanisierte Kautschuk nach dem Abkühlen filtriert wird.

11. Verfahren nach einem der vorhergehenden Ansprüche, **dadurch gekennzeichnet, dass** die Homogenisierung durch zwei unterschiedlich große Metallwalzen erfolgt, von denen eine größer als die andere ist.

## Revendications

1. Procédé continu de dévulcanisation et de recyclage du caoutchouc vulcanisé au soufre, **caractérisé en ce qu'**il comprend les étapes suivantes :
a) Collecter des déchets de caoutchouc provenant de diverses industries ;
b) Recycler le matériau de l'étape a) dans un broyeur, ce qui permet d'obtenir un matériau broyé d'environ 5 à 10 cm ;
c) Broyage successif jusqu'à ce que le matériau atteigne un grain d'environ 5 à 7 mm ;
d) Ajouter des additifs tels que le carbure de calcium, la silice, la résine, l'huile, les catalyseurs nucléophiles et les co-catalyseurs, où lesdits catalyseurs nucléophiles sont du ciment en poudre et lesdits co-catalyseurs sont des sels de cuivre ;
e) Homogénéiser le mélange de l'étape d) ;
f) Introduire le mélange obtenu à l'étape d) dans un réacteur extrudeur doté d'une broche autonettoyante et d'un disque, lequel fonctionne en continu dans un circuit fermé à des températures et pressions intérieures comprises entre 120 et 500°C, de préférence entre 200 et 320°C, et entre 80 et 100 bars ;
g) Refroidissement du mélange à une température ambiante comprise entre 20 et 30°C, ce qui complète le procédé de dévulcanisation.

2. Procédé selon la revendication 1, **caractérisé en ce que** le caoutchouc utilisé à l'étape a) provient d'industries choisies parmi l'industrie de la chaussure, l'industrie automobile et d'autres, à savoir de produits tels que semelles, courroies, semelles, courroies, rognures, bavures, pneus, le composant métallique étant éliminé.

3. Procédé selon l'une quelconque des revendications précédentes, **caractérisé en ce que** le granulé obtenu à l'étape c) a une granulométrie comprise entre 0,5 et 0,8 mm.

4. Procédé selon la revendication 4, **caractérisé en ce que** la température à l'intérieur du réacteur extrudeur est comprise entre 200 et 400°C.

5. Procédé selon l'une quelconque des revendications précédentes, **caractérisé en ce que** les catalyseurs nucléophiles sont présents dans un pourcentage en poids, compte tenu du poids total du mélange, compris entre 0,1% et 5%.

6. Procédé selon la revendication 1, **caractérisé en ce que** les catalyseurs nucléophiles sont présents dans un pourcentage en poids, compte tenu du poids total du mélange, compris entre 0,5 et 2%.

7. Procédé selon l'une quelconque des revendications précédentes, **caractérisé en ce que** les co-catalyseurs sont présents dans un pourcentage en poids, compte tenu du poids total du mélange, compris entre 1% et 8%.

8. Procédé selon l'une quelconque des revendications précédentes, **caractérisé en ce que** les co-catalyseurs sont présents dans un pourcentage en poids, compte tenu du poids total du mélange, compris entre 2% et 5%.

9. Procédé selon l'une quelconque des revendications précédentes, **caractérisé en ce que** le refroidissement à l'étape h) est effectué par échange d'eau froide dans un circuit muni de vis sans fin (convoyeur rotatif de matériaux).

10. Procédé selon l'une quelconque des revendications précédentes, **caractérisé en ce qu'**après ledit refroidissement, le caoutchouc dévulcanisé est filtré.

11. Procédé selon l'une quelconque des revendications précédentes, **caractérisé en ce que** l'homogénéisation est effectuée par deux rouleaux métalliques de taille différente, l'un plus grand que l'autre.
